# EUROPÄISCHE PATENTANMELDUNG

(11) **EP 0 876 897 A2**
(43) Veröffentlichungstag der Anmeldung: **11.11.1998**
(21) Anmeldenummer: 98103204.8
(22) Anmeldetag: 24.02.1998
(51) Int. Cl.: B29C 47/28, B29C 47/08

(54) **Querspritzkopf einer Extrusionsanlage**

(30) Priorität: 07.05.1997 DE 19719220
(71) Anmelder: Paul Troester Maschinenfabrik, D-30519 Hannover (DE)
(72) Erfinder: Eckenberg, Dietrich, Dipl.-Ing., 30559 Hannover (DE)
(74) Vertreter: Junius, Walther, Dr.

(57) **Zusammenfassung**

Die Erfindung betrifft einen Querspritzkopf einer Extrusionsanlage, bestehend aus einem an einen Extruder anzubauenden Gehäuse, welches in seinem Inneren einen Zuführringkanal aufnimmt, der einen im Gehäuse angeordneten und im Winkel zur Extrusionsrichtung des Extruders angeordneten Durchgang für die Zuführung eines mit dem Extrudat zu ummantelnden Produktes umschließt, welches in seinem Inneren ein Verteilerstück aufnimmt, und welches am Ausgang mit ringförmigen, den Extrudatstrom verjüngenden äußeren Ausformwerkzeugen versehen ist, die an der Stirnseite des Gehäuses auswechselbar befestigt sind, wobei der Durchgang endseitig von einem konischen Führungsnippel umgeben ist, dessen Außenseite gleichzeitig auch das innere Ausformwerkzeug ist. Die Erfindung schafft mit einfachen Mitteln einen kurzbauenden, gedrungenen und kompakten Querspritzkopf, der leicht und schnell ohne Demontage seiner einzelnen Bauteile zu reinigen ist, schnell und problemlos zu justieren ist und dessen die Verteilung und Ausformung des Extrudatstromes bewirkenden Flächen problemlos nachzuarbeiten sind und die Möglichkeit in sich bergen, leicht ausgetauscht zu werden. Die Erfindung besteht darin, daß die äußeren Ausformwerkzeuge eine in sich fest zusammenhängende bauliche Einheit bilden, welche am Gehäuse angebracht ist und als solche vom Gehäuse abbaubar ist, daß der im Gehäuse befindliche Zuführringkanal unmittelbar an der Trennebene von Gehäuse und der Ausformwerkzeugbaueinheit angeordnet ist.

## Beschreibung

Die Erfindung betrifft einen Querspritzkopf einer Extrusionsanlage, bestehend aus einem an einen Extruder anzubauenden Gehäuse, welches in seinem Inneren einen Zuführringkanal aufnimmt, der einen im Gehäuse angeordneten und im Winkel zur Extrusionsrichtung des Extruders angeordneten Durchgang für die Zuführung eines mit dem Extrudat zu ummantelnden Produktes umschließt, welches in seinem Inneren ein Verteilerstück aufnimmt, und welches am Ausgang mit ringförmigen, den Extrudatstrom verjüngenden äußeren Ausformwerkzeugen versehen ist, die an der Stirnseite des Gehäuses auswechselbar befestigt sind, wobei der Durchgang endseitig von einem konischen Führungsnippel umgeben ist, dessen Außenseite gleichzeitig auch das innere Ausformwerkzeug ist.

Dabei ist unter Querspritzkopf ein solcher Spritzkopf verstanden, dessen Extrusionsrichtung quer oder unter einen Winkel schräg zur Extrusionsrichtung des vorgeschalteten Extruders verläuft. Der Durchgang für die Zuführung eines mit dem Extrudat zu ummantelnden Produktes kann zentrisch oder exzentrisch im Spritzkopfgehäuse angeordnet sein.

Derartige Querspritzköpfe gibt es in verschiedenen Ausführungsformen. Ihnen ist gemeinsam, daß ihr Gehäuse aus zwei relativ langgestreckten ineinandergesteckten Bauteilen besteht, von denen das Innere den Durchgang für die Zuführung des zu ummantelnden Produktes umschließt und meist eine konische Außenfläche aufweist, während die Innenseite des äußeren Bauteiles meistens ebenfalls konisch gestaltet ist, wobei beide konischen Flächen in ihrer Gestaltung völlig gleich sein müssen, um im zusammengebauten Zustand des Querspritzkopfes aneinander anliegend als Dichtung zu dienen. In zumindest eine dieser beiden konischen Flächen sind Fließwege für das Extrudat eingefräst, um das durch eine etwa mittig im Querspritzkopf angeordnete Durchbrechung der Wandung des äußeren Gehäuseteiles in die genannten Fließwege des Querspritzkopfes eintretende Extrudat gleichmäßig rings um den zentralen Durchgang herum zu verteilen und um auf diese Weise einen (Ummantelungs-) Schlauch zu erzeugen. Das gelingt bei ausreichender Baulänge und der Anwendung aufwendiger Verteilerkonturen und Justiermittel problemlos, so daß solche Querspritzköpfe wohl überall in der einschlägigen Industrie eingesetzt werden.

An der ausgangsseitigen Stirnseite des Gehäuses sind Arbeitsmittel angebracht, die den abschließenden Teil der Ausformung des hier bereits schlauchförmig vorverteilten Extrudatstromes bewirken. Diese Arbeitsmittel sind vorzugsweise mit Schraubgewinden angebracht. Diese Arbeitsmittel verjüngen den schlauchförmigen Extrudatstrom in seinen Querschnittsdimensionen und leiten ihn in das ebenfalls ringförmige Mundstück über.

Diese Querspritzköpfe sind nicht billig in der Herstellung, insbesondere erfordert die Herstellung der beiden meist konischen oder auch zylindrischen Dichtflächen hohe Genauigkeiten. Aufwendig ist auch die Formung der in zumindest die eine innere Fläche eingearbeiteten Fließwege, weil in diesen neben der Extrudatverteilung in die Schlauchform gleichzeitig der wesentliche Teil der Ausformarbeit stattfindet.

Weitere Probleme bereitet bei diesen Querspritzköpfen die Reinigung bei einem Wechsel der verarbeiteten Kautschukmischung, für die die Teile des Querspritzkopfes auseinanderzunehmen sind, einzeln zu reinigen und dann wieder zusammenzubauen sind. Die Arbeiten der Demontage, Reinigung und der anschließenden Montage erfordern einen erheblichen Aufwand an Zeit, während der der Spritzkopf und meist auch die mit ihm ausgestattete Extrusionsanlage für den Betrieb ausfallen.

Die Erfindung vermeidet die Nachteile des Standes der Technik. Es ist die Aufgabe der Erfindung, mit einfachen Mitteln einen kurzbauenden, gedrungenen und kompakten Querspritzkopf zu schaffen, der leicht und schnell ohne Demontage seiner einzelnen Bauteile zu reinigen ist, schnell und problemlos zu justieren ist und dessen die Verteilung und Ausformung des Extrudatstromes bewirkenden Flächen problemlos nachzuarbeiten sind und die Möglichkeit in sich bergen, bei Extrudatwechsel oder Verschleiß leicht ausgetauscht zu werden.

Die Erfindung besteht darin, daß die äußeren Ausformwerkzeuge eine in sich fest zusammenhängende bauliche Einheit bilden, welche am Gehäuse angebracht ist und als solche vom Gehäuse abbaubar ist, daß der im Gehäuse befindliche Zuführringkanal unmittelbar an der Trennebene von Gehäuse und Baueinheit der Ausformwerkzeuge angeordnet ist, und daß die Trennebene zwischen Gehäuse und Baueinheit mit der Mittelachse des Durchganges einen genähert rechten Winkel einschließt und/oder vorzugsweise eine plane Fläche darstellt.

Mit dieser einfachen Konstruktion werden überraschenderweise die aufgezeigten Nachteile der bekannten Querspritzköpfe vermieden:

Die langgestreckten meist konischen Flächen und die Einarbeitung der Fließkanäle in diese Flächen können ersatzlos entfallen.

Die Arbeiten der Extrudatverteilung und der Ausformung werden in den engen Bereich um die Trennebene zwischen Gehäuse und der baulichen Einheit der Ausformwerkzeuge verlegt und dort im wesentlichen voneinander getrennt ausgeführt, die Verteilung an der Stirnseite des Gehäuses und die Ausformung in der baulichen Einheit der Ausformwerkzeuge.

Der Querspritzkopf ist einfacher und daher preisgünstiger herstellbar.

Die Fließwege sind leichter zu formen und leichter zu reinigen.

Die Reinigungsarbeiten sind schneller und leichter durchführbar und damit weniger zeitaufwendig. Die Stillstandszeiten des Spritzkopfes und damit auch der Extrusionsanlage werden damit verringert.

Der Querspritzkopf weist geringeres Gewicht und weniger Bauvolumen auf.

Dieser Querspritzkopf läßt sich dabei so gestalten, daß die Tiefe des Zuführringkanales (in Extrusionsrichtung des Querspritzkopfes gesehen) gering gegenüber seinem Durchmesser ist. Das führt zu kürzerer Bauform und weiterer erleichterter Reinigung.

Besonders vorteilhaft ist es, wenn das unmittelbar an die Trennebene anschließende Ausformwerkzeug mit der dem Materialstrom zugekehrten Oberfläche, deren Tangenten vorzugsweise einen stumpfen Winkel einschließen, ein austauschbarer Ring ist. Dieser läßt sich leicht und unabhängig von anderen Bauteilen justieren, er läßt sich ggf. leicht nachbearbeiten und er läßt sich bei Extrudatwechsel oder bei Verschleiß ggf.leicht austauschen.

Dazu ist es vorteilhaft, wenn der austauschbare Verteilerring, der das erste Teil der unmittelbar an die Trennebene anschließenden äusseren Ausformwerkzeuge bildet, mittels einer Justiervorrichtung quer zum Materialstrom einstellbar ist.

Weiter verkürzt es die Maschinenstillstandszeiten, wenn bei diesem Querspritzkopf die bauliche Einheit der äußeren Ausformwerkzeuge mit einer Schnellbefestigungsvorrichtung am Gehäuse befestigt ist. Dann läßt sich die bauliche Einheit der Ausformwerkzeuge leicht und schnell von der Stirnseite des Gehäuses lösen und wieder befestigen.

Dazu ist es dann besonders vorteilhaft, wenn die bauliche Einheit der Ausformwerkzeuge verschwenkbar mittels eines Gelenkes oder verschiebbar in Führungen am Gehäuse gelagert ist.

Die Verarbeitung abrasiver Extrudate bringt es mit sich, daß in und an den Extrudat führenden Kanälen im Inneren des Querspritzkopfes Verschleißerscheinungen auftreten, die den Produktionsvorgang insbesondere dann beeinflussen, wenn sie an den Verteil- und Ausformkanälen auftreten. Um diese in einem solchen Falle schnell auswechseln zu können, ist es von Vorteil, wenn der unmittelbar an die Trennebene anschließende, in der Stirnseite des Gehäuses befindliche Verteilerkanal in einen Ring eingearbeitet ist, welcher in eine stirnseitige Ausnehmung des Gehäuses eingelegt ist. Dieses Auswechseln ist auch für die Änderung bzw. den Wechsel von Fließkonturen von Vorteil.

Da bei diesem Querspritzkopf die räumliche Zone der Extrudatverteilung und -ausformung meist sehr kurz ist und weil neben dem Extrudatzuführkanal Bauraum für die Anbringung der Ausformwerkzeuge benötigt wird, muß in manchen Fällen die Extrudatzuführung in den Verteilkanal schräg oder parallel zur Extrusionsrichtung des Querspritzkopfes erfolgen. In diesen Fällen ist es von Vorteil, wenn der das Extrudat vom Extruder in den Zuführringkanal führende Zuführungskanal einen Bogen oder einen Knick aufweist und vorzugsweise Enden aufweist, von denen das eine, in den Verteilerkanal führende, genähert parallel zur Achse des Querspritzkopfes, das andere Ende hingegen genähert quer zur Achse des Querspritzkopfes verläuft.

Weiterhin ist es für die Gestaltung dieses Querspritzkopfes von Vorteil, daß in der Baueinheit der äußeren Ausformwerkzeuge das den Führungsnippel umgebende Mundstück ein Ring ist, der durch an seinem äußeren Umfang angeordnete Verschiebewerkzeuge in seiner radialen Stellung gegenüber dem Führungs- und inneren Ausformnippel einstellbar gehalten ist.

Als eine besonders zweckmäßige Bauform dieses Querspritzkopfes wurde gefunden, daß die Baueinheit der äußeren Ausformwerkzeuge aus einem ringförmigen Grundelement mit nach innen gerichtetem Flansch besteht, an dessen dem Gehäuse des Querspritzkopfes zugekehrter Seite der verschiebbare, an der Stirnseite des Gehäuses anliegende Verteilerring anliegt und an dessen anderer Seite das Mundstück anliegt, daß das Grundelement die Werkzeuge zur radialen Verstellung und Halterung des radial verstellbaren Verteilerringes und des Mundstücks trägt, und daß das Grundelement klappbar oder axial verschiebbar am Gehäuse des Querspritzkopfes angebracht ist. Dieses Grundelement kann im Querschnitt auch eine eckige oder quadratische äußere Form haben.

Dieser Querspritzkopf kann auch so gestaltet sein, daß der zentrisch oder exzentrisch im Gehäuse befindliche Durchgang in einem zusätzlichen Teil als Pinole ausgeführt ist.

Dabei kann es zweckmäßig sein, daß die Pinole mit dem darin befindlichen Durchgang axial verstellbar und ggf. feststellbar angeordnet ist.

Es besteht hierbei auch die Möglichkeit, daß das Gehäuse bzw. die Pinole zur Aufnahme auswechselbarer Führungselemente ausgeführt ist.

Dieser Querspritzkopf kann auch so ausgeführt sein, daß das Gehäuse bzw. die Pinole zur Aufnahme dichtender Anschlußteile für Zusatzmedien oder einen Vakuumanschluß ausgeführt ist.

Dieser Querspritzkopf läßt sich auch so ausführen, daß der horizontale Winkel zwischen Extruderachse und Spritzkopfachse vom rechten Winkel abweicht.

Eine andere Ausführungsmöglichkeit dieses Querspritzkopfes besteht darin, daß die Spritzkopfachse horizontal oder im Winkel bis zur vertikalen Achse liegt.

Das Wesen der Erfindung ist nachstehend anhand eines in der Zeichnung schematisch dargestellten Ausführungsbeispieles näher erläutert. Es zeigen:

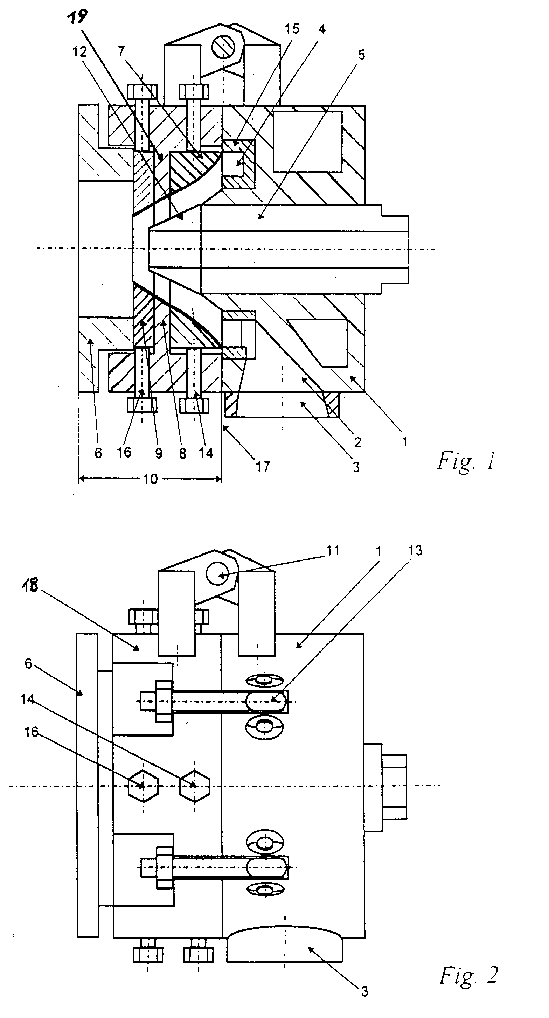

Fig.1 einen Schnitt durch den Querspritzkopf,
Fig.2 eine Ansicht diese Querspritzkopfes.

Der Querspritzkopf besteht aus einem an dem nicht dargestellten Extruder anzubauenden Gehäuse 1, welches zu diesem Zweck mit einem Flansch 3 versehen ist, der eingangsseitig für das Anflanschen an den nicht dargestellten Extruderzylinder oder einen Zwischenflansch dient. Das Gehäuse 1 nimmt in seinem Inneren an seiner Stirnseite einen (zumindest genähert) ringförmigen Verteilerkanal 4 auf, der einen zentrisch im Gehäuse 1 angeordneten und quer zur Extrusionsrichtung des Extruders angeordneten Durchgang 5 für die Zuführung eines nicht dargestellten mit dem Extrudat zu ummantelnden Produktes konzentrisch umschließt. In diesen Verteilerkanal 4 mündet der vom Extruder kommende, durch den Flansch 3 verlaufende Zuführungskanal 2, welcher in seinem Verlauf einen Knick aufweist. in dem anschließenden Verteilerkanal 4 wird das Extrudat so geführt, daß es (zunächst mit Abstand) den Durchgang 5 ringförmig umschließt und somit den Anfang eines Extrudatschlauches bildet. Die Tiefe des ringförmigen Verteilerkanales 4 (in Extrusionsrichtung des Querspritzkopfes gesehen) ist gering gegenüber seinem Durchmesser.

Vor der Stirnseite des Gehäuses 1 des Querspritzkopfes befinden sich Ausformwerkzeuge 7,8,9, die (durch Haltemutter 6) zu einer Baueinheit zusammengefaßt sind. Diese Baueinheit 10 ist mit einem Gelenk 11 an dem Gehäuse 1 angelenkt und mittels Verbindungsschrauben 13 am Gehäuse 1 befestigt. Dabei liegt die Stirnseite in der Trennebene 17 zwischen Gehäuse 1 und der Baueinheit 10 der Ausformwerkzeuge 7,8,9.

Die Ausformwerkzeuge 7,8,9 formen die Außenseite des schlauchförmigen Extrudates und verringern dabei den Durchmesser des Extrudatschlauches. Die Innenseite dieses Extrudatschlauches wird durch die Außenseite eines Nippels 12 geformt, der am Ende des Durchganges 5 angeordnet ist. Dieser Nippel 12 dient mit seiner Innenseite der Zentrierung des durch den Durchgang 5 eingeführten, vom Extrudatschlauch zu ummantelnden Produktes.

Die Baueinheit 10 der Ausformwerkzeuge 7,8,9 besteht aus einem ringförmigen oder eckigen oder quadratischen Grundelement 18 mit nach innen gerichtetem Flansch 19, an dessen dem Gehäuse 1 des Querspritzkopfes zugekehrter Seite der quer zur Strömungsrichtung des Extrudates einstellbare, an der Stirnseite des Gehäuses 1 anliegende Verteilerring 7 anliegt und an dessen anderer Seite das Mundstück 9 anliegt. Dieses Mundstück 9 ist ebenfalls quer zur Strömungsrichtung des Extrudates einstellbar, und zwar durch Justierschrauben 16. Das Grundelement 18 trägt die Elemente der Justiervorrichtung (14) zur radialen Verstellung des Verteilerringes 7 und des Mundstücks 9. Der Verteilerring 7 kann unterschiedliche Innenoberflächen bzw.Innenkonturen je nach zu verarbeitendem Extrudat aufweisen und ist deshalb leicht austauschbar.

Von den ringförmigen Ausformwerkzeugen 7,8,9 der Baueinheit 10 ist der an der Stirnseite des Gehäuses 1 anliegende Verteilerring 7 von besonderer Bedeutung, weil dieser Verteilerring 7 die Form des Extrudatschlauches wesentlich formt und bestimmt. Der unmittelbar an die Trennebene anschließende Verteilerring 7 mit der dem Extrudatstrom zugekehrten Oberfläche ist ein leicht austauschbarer Ring. Bei durch verändertes Strömungsverhalten eines anderen Extrudates bei Extrudatwechsel oder bei Auftreten von Verschleiß an seiner Oberfläche ist er daher leicht durch einen anderen bzw. neuen Ring zu ersetzen.
Dieser Ring ist mittels Justierschrauben 14 einstellbar gehaltert.

Der unmittelbar an die die Trennebene 17 bildende Stirnseite des Gehäuses 1 anschließende, in der Stirnseite des Gehäuses 1 befindliche Verteilkanal 4 ist in einen Ring 15 eingearbeitet, welcher in eine stirnseitige Ausnehmung des Gehäuses 1 eingelegt ist. Dieser Ring 15 ist bei zu veränderndem Fließverhalten und/oder bei Auftreten von Verschleißerscheinungen gegen einen neuen Ring auswechselbar.

### Liste der Bezugszeichen

- 1: Gehäuse
- 2: Zuführungskanal
- 3: Flansch
- 4: Verteilerkanal
- 5: Durchgang
- 6: Haltemutter
- 7: Ausformwerkzeug (Verteilerring)
- 8: Ausformwerkzeug (Grundelement)
- 9: Ausformwerkzeug (Mundstück)
- 10: Baueinheit
- 11: Gelenk
- 12: Nippel
- 13: Verbindungsschraube
- 14: Justierschraube
- 15: Ring
- 16: Justierschraube
- 17: Trennebene
- 18: Grundelement
- 19: nach innen gerichteter Flansch

## Patentansprüche

1. Querspritzkopf einer Extrusionsanlage,
bestehend aus einem an einen Extruder anzubauenden Gehäuse,
welches in seinem Inneren einen Zuführringkanal aufnimmt, der einen im Gehäuse angeordneten und im Winkel zur Extrusionsrichtung des Extruders angeordneten Durchgang für die Zuführung eines mit dem Extrudat zu ummantelnden Produktes umschließt,
welches in seinem Inneren ein Verteilerstück aufnimmt, und
welches am Ausgang mit ringförmigen, den Extrudatstrom verjüngenden äußeren Ausformwerkzeugen versehen ist,
die an der Stirnseite des Gehäuses auswechselbar befestigt sind,
wobei der Durchgang endseitig von einem konischen Führungsnippel umgeben ist, dessen Außenseite gleichzeitig auch das innere Ausformwerkzeug ist,
dadurch gekennzeichnet,
daß die äußeren Ausformwerkzeuge (7,8,9) eine in sich fest zusammenhängende bauliche Einheit (10) bilden, welche am Gehäuse (1) angebracht ist und als solche vom Gehäuse (1) abbaubar ist,
und daß der im Gehäuse (1) befindliche Verteilerkanal (4) unmittelbar an der Trennebene (17) von Gehäuse (1) und Baueinheit (10) der Ausformwerkzeuge (7,8, 9) angeordnet ist.

2. Querspritzkopf nach Anspruch 1,
dadurch gekennzeichnet,
daß die Trennebene (17) zwischen Gehäuse 1 und Baueinheit (10) mit der Mittelachse des Durchganges (5) einen genähert rechten Winkel einschließt und/oder vorzugsweise eine plane Fläche darstellt.

3. Querspritzkopf nach Anspruch 1,
dadurch gekennzeichnet,
daß der unmittelbar an die Trennebene (17) anschließende Verteilerring (7) austauschbar ist.

4. Querspritzkopf nach Anspruch 1,
dadurch gekennzeichnet,
daß der austauschbare Verteilerring (7), der das erste Teil der unmittelbar an die Trennebene (17) anschließenden Ausformwerkzeuge bildet, mittels einer Justiervorrichtung quer zum Materialstrom einstellbar ist.

5. Querspritzkopf nach Anspruch 1,
dadurch gekennzeichnet,
daß die bauliche Einheit (10) der äußeren Ausformwerkzeuge (7,8,9) mit einer Schnellbefestigungsvorrichtung (13) am Gehäuse (1) befestigt ist.

6. Querspritzkopf nach Anspruch 1,
dadurch gekennzeichnet,
daß die bauliche Einheit (10) der äußeren Ausformwerkzeuge (7,8,9) verschwenkbar oder verschiebbar am Gehäuse (1) gelagert ist.

7. Querspritzkopf nach Anspruch 1,
dadurch gekennzeichnet,
daß der unmittelbar an die Trennebene (17) anschließende, in der Stirnseite des Gehäuses (1) befindliche Verteilerkanal (4) in einen Ring (15) eingearbeitet ist, welcher in eine stirnseitige Ausnehmung des Gehäuses (1) auswechselbar, aber zentriert und fixiert eingelegt ist.

8. Querspritzkopf nach Anspruch 1,
dadurch gekennzeichnet,
daß die Baueinheit (10) der äußeren Ausformwerkzeuge (7,8,9) aus einem ringförmigen Grundelement (18) mit nach innen gerichtetem Flansch (19) besteht, an dessen dem Gehäuse (1) des Querspritzkopfes zugekehrter Seite der verschiebbare, an der Stirnseite des Gehäuses (1) anliegende Verteilerring (7) anliegt und an dessen anderer Seite das Mundstück (9) anliegt,
daß das Grundelement (18) die Elemente der Justiervorrichtung (14,16) zur radialen Verstellung und Halterung des radial verstellbaren Verteilerringes (7) und des Mundstücks (9) trägt,
und daß das Grundelement (18) klappbar oder axial verschiebbar am Gehäuse (1) des Querspritzkopfes angebracht ist.

9. Querspritzkopf nach Anspruch 1,
dadurch gekennzeichnet,
daß der zentrisch oder exzentrisch im Gehäuse befindliche Durchgang in einem zusätzlichen Teil als Pinole ausgeführt oder mit einer Pinole versehen ist.

10. Querspritzkopf nach Anspruch 9,
dadurch gekennzeichnet,
daß die Pinole mit dem darin befindlichen Durchgang axial verstellbar ist.

11. Querspritzkopf nach Anspruch 1 und 9,
dadurch gekennzeichnet,
daß das Gehäuse bzw. die Pinole zur Aufnahme auswechselbarer Führungselemente ausgeführt ist.

12. Querspritzkopf nach Anspruch 1 und 9,
dadurch gekennzeichnet,
daß das Gehäuse bzw. die Pinole zur Aufnahme dichtender Anschlußteile für Zusatzmedien oder einen Vakuumanschluß ausgeführt ist.
